# EUROPEAN PATENT APPLICATION

(11) **EP 2 636 719 A1**
(43) Date of publication of application: **11.09.2013**
(21) Application number: 12183297.6
(22) Date of filing: 06.09.2012
(51) Int. Cl.: C10G 1/10, C10L 1/12

(54) **A method for manufacturing of treated fuel for a diesel engine and a treated fuel for a diesel engine**

(30) Priority: 07.03.2012 PL 39833512
(71) Applicant: Idea Sp. z o.o., 90-752 Lodz (PL)
(72) Inventor: Mazurek, Przemyslaw, 90-752 Lodz (PL); Kopaczel, Robert, 90-752 Lodz (PL)
(74) Representative: Pawlowski, Adam

(57) **Abstract**

A method for manufacturing of treated fuel for diesel engines in a process of catalytic depolymerisation, wherein fragmented municipal and/or organic waste constituting a batch material, is dried and then processed in a block of separation and evaporation (108) connected with a mixing turbine (110) wherein catalytic depolymerisation is conducted, and then the depolymerised material is distilled in a distiller (109) to obtain the treated fuel for diesel engines, wherein part of the obtained fuel is used to supply a combustion-electric generator (111). The catalytic depolymerisation is conducted in a presence of sodium aluminosilicate as a catalyst, wherein the readings of sensors corresponding to the respective catalytic depolymerisation process blocks (108-111) are monitored using a technological process control block (112), and, if any irregularities, resulting from insufficient amount of catalyst, are found, an automatic catalyst feeder (113) is activated to apply a batch of catalyst in the amount of from 5 kg to 35 kg per 1000 L of fuel in the process, after which the monitoring of individual blocks (108-111) operation is resumed, and wherein the obtained fuel is treated with a colloidal solution of cerium oxide (CeO₂) particles having a size from 10 nm to 50 nm in light distillates of petroleum in the amount providing a total concentration of cerium oxide CeO₂ particles in the fuel at the level of 20 ppm to 100 ppm.

## Description

The present invention relates to a method for manufacturing of treated fuel for a diesel engine and a treated fuel for a diesel engine.

One of innovative technologies of processing of organic and non-organic waste into fuels for compression-ignition (diesel) engine is the technology of catalytic depolymerisation, in short KDV (from German *Katalytische Drucklose Verölung).* The DKV technology allows for nearly wasteless processing of many kinds of materials into high-quality diesel oil.

A German patent no. DE10049377 describes a method for manufacturing of a biocomponent for diesel fuels in a catalytic depolymerisation process using a catalyst consisting of aluminium silicate with added sodium.

A US patent no. US7473348 describes a method for manufacturing of a biocomponent for diesel fuels in a catalytic depolymerisation process, whereby hydrocarbon-containing waste is mixed with oil, which is heated using thermal energy obtained from the kinetic energy of oil flow, thus increasing the thermal efficiency of the process.

A US patent application US2007/0131585 describes a method for manufacturing of a biocomponent for diesel fuels in a catalytic depolymerisation process, where thermal efficiency of the process is increased by using high-speed chamber mixer (turbine).

A Polish patent application no. P.389069 describes a method for manufacturing a biocomponent for diesel fuels in a catalytic depolymerisation process, where preliminary preparation systems for batch materials are used; this facilitates reducing demand for energy necessary to perform the process catalytic depolymerisation of raw material.

There are known pre-treated diesel fuels with treatment agents based on metal nanoparticles, which serve as catalysts accelerating and improving combustion process. They are used for example in Diesel engines, where the problem is unequal oxygen distribution in the combustion chamber. Nanoparticles are used as oxygen carriers, improving its distribution in the engine chamber, which results in a more effective and complete combustion. For example, American patent application no. US20100139598 discloses a fuel with carbon nanocapsules of a size of several to over a dozen nanometres. Application of the treatment agent improves the uniformity of fuel combustion.

The above publications prove that the technology of manufacturing of diesel fuels in the process of catalytic depolymerisation is still being improved. The research also involves fuel treatment agents based on nanoparticles. However, no method of manufacturing diesel fuel in the process of catalytic depolymerisation has been developed so far, in which a treatment agent based on nanoparticles would be applied to the fuel in order to obtain treated fuel.

The object of the invention is a method for manufacturing of treated fuel for diesel engines in a process of catalytic depolymerisation, wherein fragmented municipal and/or organic waste constituting a batch material, is dried and then processed in a block separation and evaporation connected with a mixing turbine, wherein catalytic depolymerisation is conducted, and then the depolymerised material is distilled in a distiller to obtain the treated fuel for diesel engines, wherein part of the obtained fuel is used to supply a combustion-electric generator. The catalytic depolymerisation is conducted in a presence of sodium aluminosilicate as a catalyst, wherein the readings of sensors corresponding to the respective catalytic depolymerisation process blocks are monitored using a control block for technological process, and, if any irregularities, resulting from insufficient amount of catalyst, are found, an automatic catalyst feeder is activated to apply a batch of catalyst in the amount of from 5 kg to 35 kg per 1000 L of fuel in the process, after which the monitoring of individual blocks operation is resumed, and wherein the obtained fuel is treated with a colloidal solution of cerium oxide (CeO₂) particles having a size from 10 nm to 50 nm in light distillates of petroleum in the amount providing a total concentration of cerium oxide CeO₂ particles in the fuel at the level of 20 ppm to 100 ppm.

Another object of the invention is a treated fuel for diesel engines, manufactured in a process of catalytic depolymerisation, wherein fragmented municipal and/or organic waste constituting a batch material, is dried and then processed in a block separation and evaporation connected with a mixing turbine, wherein catalytic depolymerisation is conducted, and then the depolymerised material is distilled in a distiller to obtain the treated fuel for diesel engines, wherein part of the obtained fuel is used to supply a combustion-electric generator. The catalytic depolymerisation is conducted in a presence of sodium aluminosilicate as a catalyst, wherein the readings of sensors corresponding to the respective catalytic depolymerisation process blocks are monitored using a control block for technological process, and, if any irregularities, resulting from insufficient amount of catalyst, are found, an automatic catalyst feeder is activated to apply a batch of catalyst in the amount of from 5 kg to 35 kg per 1000 L of fuel in the process, after which the monitoring of individual blocks operation is resumed, and wherein the obtained fuel is treated with a colloidal solution of cerium oxide (CeO₂) particles having a size from 10 nm to 50 nm in light distillates of petroleum in the amount providing a total concentration of cerium oxide CeO₂ particles in the fuel at the level of 20 ppm to 100 ppm.

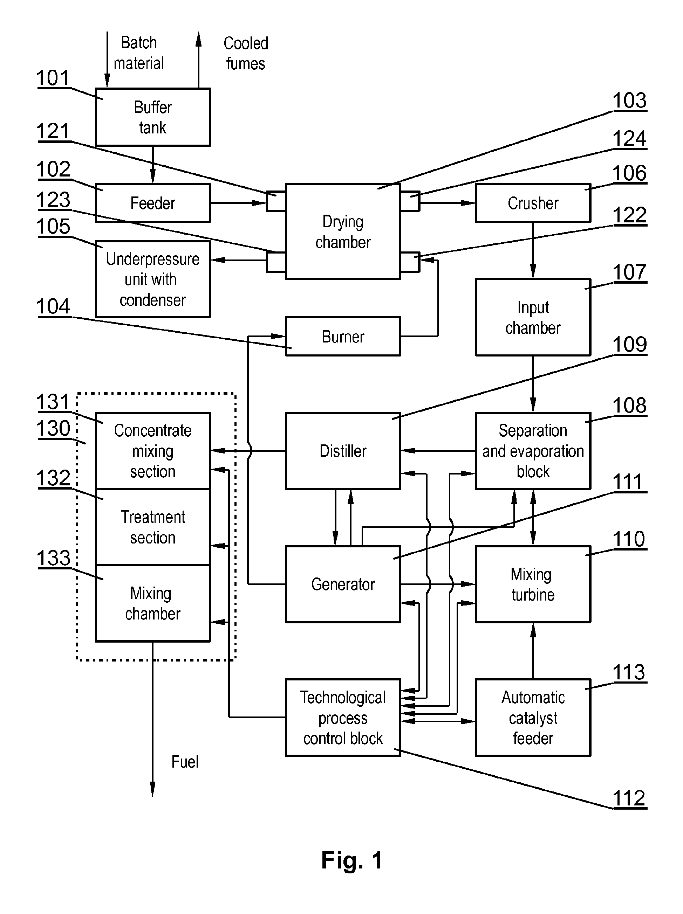

The invention is presented by means of exemplary embodiment on a drawing, in which Fig. 1 presents the diagram of the system of manufacturing fuel for diesel engines according to the invention, with mixing a block controlled by a technological process control block.

The batch material, from which, according to the invention, fuel for diesel engines is obtained, is fragmented municipal and/or organic waste, preferably with granulation below 10 cm.

The batch material is supplied, for example, from the outlet or inlet of the material feeder unit to a buffer tank 101, from which it is transported to a dryer 103 through a feeder 102.

In a sample process presented in Fig. 1, the dryer chamber is equipped with an inlet hole 121, through which the batch material is supplied to the chamber, and an outlet hole 124, through which the processed material is carried away from the chamber. In addition, the chamber is equipped with a hot fumes inlet hole 122, through which a mixture of fumes from a generator 111 and optionally from a burner 104 (preferably powered by a biomass) is supplied. The dryer chamber 103 is also equipped with a water vapour outlet hole 123, attached to the underpressure unit with a condenser 105. The raw material is dried in the dryer chamber until its moisture content reaches the required level, preferably below 30%. The dried material is carried away from the chamber 103 to a crusher 106.

The dried and fragmented material is submitted to the next part of the system comprising blocks 107-111, where the main process of catalytic depolymerisation is performed. From an input chamber 107 the material is transported through a block of separation and evaporation 108 to a mixing turbine 110, where it is subject to catalytic depolymerisation. During the catalytic depolymerisation, a process of material exchange between the block 108 and the mixing turbine 108 is conducted. The depolymerised material undergoes thermal treatment in the evaporator sector of the block 108 in order to separate water, and then it is distilled in a distiller 109. The output product that is fuel for diesel engines is obtained at the distiller outlet 109. Part of the fuel is transported to a generator 111 comprising an engine powered by the fuel and electric generator, which supplies the blocks 108, 109, 110 with electricity and thermal energy. Hot fumes from the generator 111 are supplied to heat the material in the dryer chamber 103.

The technological process control block 112 automatically monitors the operation of the individual blocks, where the process of catalytic polymerisation is performed 108-111 as well as the mixing blocks 131-133. To ensure a correct polymerisation process, sodium aluminosilicate in a crystal form is supplied to the mixing turbine, it serves as a catalyst for an automatic feeder 113.

The catalyst has two basic functions in the process: binding, by ions exchange, halogens, nitrogen, heavy metals (contained in the batch material) to inorganic salts, and catalysing the reaction, thereby facilitating the generation of valuable products.

As that the catalyst is immune to halide or heavy metal poisoning, there is no need for removing materials containing these compounds from the batch. To reclaim the catalyst, calcium carbonate (CaCO₃) is used, which results in production of relevant salts.

The catalyst is not a toxic substance, therefore it is not dangerous for people involved in the operation nor for the environment.

The catalyst and batch emulsion is directed to the turbine 110, where it is heated to the temperature of about 280°C. The heat inside the turbine is not supplied from the outside, but it is generated as a result of transformation of mechanical energy (through the process of internal friction) from an engine with propeller shaft.

During the mixing in the turbine 110 the batch material is subject to a process of catalyst adsorption, together with depolymerisation and desorption of the reaction products.

Due to the fact that the reaction occurs at a temperature of 280°C there is no possibility of generating toxic dioxins or furans, which could occur as byproducts of reactions occurring at a temperature of 400°C. Moreover, thanks to the relatively low temperature of the reaction in the turbine 110 no heavy coal deposits (cokes) are generated, which could have negative impact in the depolymerisation process.

During approx. 3 minutes of the presence of the substrate within the reactor 110 long chains of organic molecules are polymerised and transformed into saturated hydrocarbons (alkanes) containing from 12 to 20 atoms of carbon in the molecular chain.

If the technological process control block 112 detects any irregularities in the operation of the blocks 108-111, which could result from the shortage of catalyst in the process, the process control block 112 activates the automatic catalyst feeder 113, which adds specified amount of catalyst to the mixing turbine. For example, 5 to 35 kg of sodium aluminosilicate per 1000L of fuel may be added during the process.

The technological process control block 112 may observe the following irregularities during the operation:
- separation and evaporation block 108: no substrate reaction and no homogeneity of the emulsion,
- distiller 109: incorrect amount and conversion of distillates undergoing distillation,
- mixing turbine 110: no adsorption of catalyst on batch material, depolymerisation and desorption of the reaction products,
- generator 111: excessive consumption of electricity and waste heat.

The irregularities of the individual blocks 108-111 are detected by dedicated sensors 108A-111A assigned to the blocks 108-111. The sensors may be automatic or manually operated by technical staff, who, in the case of irregularities observed, may activate the sensor. The measurements can be performed on a constant basis or periodically.

The use of the automatic catalyst feeder 113 improves the production process, maintaining the correct technical parameters of depolymerised material. After detecting irregularities in the operation of any block, the automatic catalyst feeder 113 is activated, supplying specified batch of catalyst to the turbine 110. This should restore the correct parameters of operation of blocks 108-111. After the catalyst has been added and relevant time has passed, another check of the sensors (108-111) should be conducted, and if irregularities are still present, the automatic catalyst feeder 113 should be activated once again. If a change or improvement of the process is not observed during a number of cycles, the process control block can generate a signal forcing the manual intervention of technical staff to the block operation.

The fuel obtained from the distiller 109 is transported to the mixing block 130. The technological process control block 112 of the mixing block 130 monitors the integrated batching system, adjusting the amount of added supplements. In the concentrate mixing section 131 the obtained fuel is mixed with chemical additives such as foam suppressants, depressants, etc. in a rate appropriate for a given additive. In the treatment section 132 the fuel is mixed with colloidal solution of cerium oxide (CeO₂) particles having a size from 10 nm to 50 nm and preferably a concentration of from 1% (i.e. 10000ppm) to 10% (i.e. 100000ppm) in light petroleum distillates in such an amount as to obtain the final concentration of cerium dioxide CeO₂ in the fuel at the level of 20 ppm to 100 ppm (parts per million). The application of cerium dioxide CeO₂ particles contributes to:
- raising the fuel ignition temperature (ignition temperature raise by 3°C for 20 ppm of CeO₂ concentration was confirmed), which increased the safety of fuel storage and transportation,
- increase of kinematic viscosity, which advocates better lubrication of fuel jet in the engine.

For example, as the cerium dioxide CeO₂ nanoparticles solution, a product named Envirox manufactured by Energenics Europe Ltd., Oxfordshire, UK can be used.

The prepared product goes to the mixing chamber 133, where the final mixing with additional substances, according to relevant formulas for a given type of duel, is conducted.

## Claims

1. A method for manufacturing of treated fuel for diesel engines in a process of catalytic depolymerisation, wherein fragmented municipal and/or organic waste constituting a batch material, is dried and then processed in a block of separation and evaporation (108) connected with a mixing turbine (110) wherein catalytic depolymerisation is conducted, and then the depolymerised material is distilled in a distiller (109) to obtain the treated fuel for diesel engines, wherein part of the obtained fuel is used to supply a combustion-electric generator (111), **characterized in that** the catalytic depolymerisation is conducted in a presence of sodium aluminosilicate as a catalyst, wherein the readings of sensors corresponding to the respective catalytic depolymerisation process blocks (108-111) are monitored using a technological process control block (112), and, if any irregularities, resulting from insufficient amount of catalyst, are found, an automatic catalyst feeder (113) is activated to apply a batch of catalyst in the amount of from 5 kg to 35 kg per 1000 L of fuel in the process, after which the monitoring of individual blocks (108-111) operation is resumed, and wherein the obtained fuel is treated with a colloidal solution of cerium oxide (CeO₂) particles having a size from 10 nm to 50 nm in light distillates of petroleum in the amount providing a total concentration of cerium oxide CeO₂ particles in the fuel at the level of 20 ppm to 100 ppm.

2. A treated fuel for diesel engines, manufactured in a process of catalytic depolymerisation, wherein fragmented municipal and/or organic waste constituting a batch material, is dried and then processed in a block of separation and evaporation (108) connected with a mixing turbine (110) wherein catalytic depolymerisation is conducted, and then the depolymerised material is distilled in a distiller (109) to obtain the treated fuel for diesel engines, wherein part of the obtained fuel is used to supply a combustion-electric generator (111), **characterized in that** the catalytic depolymerisation is conducted in a presence of sodium aluminosilicate as a catalyst, wherein the readings of sensors corresponding to the respective catalytic depolymerisation process blocks (108-111) are monitored using a technological process control block (112), and, if any irregularities, resulting from insufficient amount of catalyst, are found, an automatic catalyst feeder (113) is activated to apply a batch of catalyst in the amount of from 5 kg to 35 kg per 1000 L of fuel in the process, after which the monitoring of individual blocks (108-111) operation is resumed, and wherein the obtained fuel is treated with a colloidal solution of cerium oxide (CeO₂) particles having a size from 10 nm to 50 nm in light distillates of petroleum in the amount providing a total concentration of cerium oxide CeO₂ particles in the fuel at the level of 20 ppm to 100 ppm.
